# EUROPÄISCHE PATENTSCHRIFT

(11) **EP 0 586 850 B1**
(45) Veröffentlichungstag und Bekanntmachung des Hinweises auf die Patenterteilung: **14.02.1996**
(21) Anmeldenummer: 93111850.9
(22) Anmeldetag: 23.07.1993
(51) Int. Cl.: C01B 39/00

(54) **Verfahren zur Herstellung von Thixotropiermitteln**
Method for the preparation of thixotropic agents
Procédé de préparation d'agents thixotropiques

(30) Priorität: 07.08.1992 DE 4226222
(43) Veröffentlichungstag der Anmeldung: 16.03.1994
(73) Patentinhaber: SÜD-CHEMIE AG, D-80333 München (DE)
(72) Erfinder: Hähn, Reinhard, Dr., D-8311 Vilsheim (DE); Schall, Norbert, Dr., D-8059 Langenpreising (DE); Heininger, Wolfgang, Dr., D-8052 Moosburg (DE)
(74) Vertreter: Reitzner, Bruno, Dr.

(56) Entgegenhaltungen:
- DE-A- 2 754 758
- DE-A- 3 230 476
- US-A- 2 966 506

## Beschreibung

Die Erfindung betrifft ein Verfahren zur Herstellung eines Thixotropiermittels für organische Medien auf der Basis von organophilen Tonen (Organoclays) durch Umsetzung eines in einer wäßrigen Dispergiermittellösung dispergierten Tonminerals aus der Gruppe der Smektite mit quaternären Oniumverbindungen.

Organophile Tone sind seit den 50er Jahren bekannt (vgl. US-A-2 531 427). Von späteren Entwicklungen seien beispielsweise nur die US-A-2 966 506 und 4 105 578 genannt. Ein zusammenfassender Aufsatz über die Herstellung von organophilen Tonen findet sich in "Polymers Paint Colour Journal", Juni 1987, Vol. 177 No. 4193, Seiten 402 bis 414.

In der DE-A-32 30 476 ist angegeben, daß bei Verwendung von Calcium-Bentoniten und Calcium-Hectoriten zunächst die Calciumionen durch Natriumionen ersetzt werden müssen, wobei man die Suspension des Minerals über einen Ionenaustauscher laufen lassen kann. Es handelt sich hierbei um einen organischen Ionenaustauscher, der nicht in der Suspension verbleibt.

Die DE-A-31 49 131 beschreibt synthetisch hergestellte Schichtsilicate, die mit quartären Ammoniumverbindungen modifiziert sind.

Üblicherweise werden organophile Tone nach folgendem Verfahren hergestellt:
Es wird Wasser mit einer Temperatur von 30 bis 80°C, vorzugsweise von 40 bis 50°C, vorgelegt, wobei nicht enthärtetes Wasser verwendet wird. Anschließend wird mit einem hochscherenden Rührwerk das Tonmineral eindispergiert. Der Feststoffgehalt der Dispersion beträgt etwa 1 bis 6 Gew.-%, vorzugsweise 2 bis 5 Gew.-%.

Sowohl nach dem Stand der Technik als auch erfindungsgemäß werden üblicherweise Tone aus der Gruppe der Smektite verwendet, welche eine Kationenaustauschkapazität von mindestens 40 mVal/100 g Ton aufweisen. Vorzugsweise werden die Tone in der Natriumform verwendet, weil sie in dieser Form gut quellfähig sind.

Gleichermaßen geeignet sind auch nach dem Hydrothermalverfahren synthetisch hergestellte smektitische Tonmineralien (vgl. z.B. die US-A-3 671 190, 3 252 757 und 2 666 407).

Als Beispiele für Tone vom Smektit-Typ seien angeführt:

### Montmorillonit

[(Al₄₋ₓMgₓ) Si₈O₂₀ (OH)₄] x Me⁺

Me⁺ : Na⁺, Ca²⁺

### Hectorit

[(Mg₆₋ₓLiₓ) Si₈O₂₀ (OH)₄] x Me⁺

Me⁺ : Na⁺, Ca²⁺

### Saponit

[Mg_{6-y}Al_{y}) (Si_{8-x-y}Al_{x+y}) O₂₀ (OH)₄] x Me⁺

Me⁺ : Na⁺, Ca²⁺
Die Suspension des Tonminerals in Wasser kann weiterhin Dispergiermittel, wie anorganische oder organische Phosphatverbindungen, z.B. Alkaliphosphate oder -phosphonate usw., enthalten. Diese dienen einerseits der Teilenthärtung des verwendeten Wassers, andererseits der Verbesserung der Dispersibilität der Tonsuspensionen (vergl. DE-A-32 30 476).

Beim Dispergieren der Tonsuspension quillt das smektitische Tonmineral zunächst auf und wird durch Scherwirkung zweckmäßig in Primärkristalle delaminiert.

Der organophile Ton wird durch Umsetzung der Smektit-Tonsuspension mit quaternären Oniumverbindungen, insbesondere quaternären Ammoniumverbindungen hergestellt. Geeignete quaternäre Ammoniumverbindungen lassen sich durch folgende Formel wiedergeben: 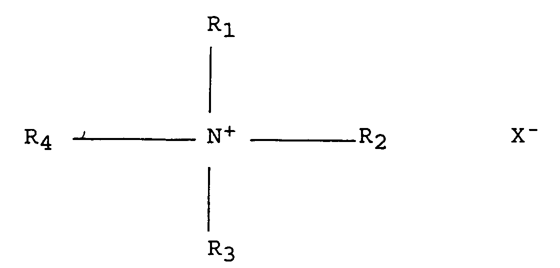
In dieser Formel haben die Substituenten folgende Bedeutungen:
R₁ ist eine gesättigte oder ungesättigte aliphatische Kohlenwasserstoffgruppe mit 10 bis 20 C-Atomen, R₂ und R₃, welche gleich oder voneinander verschieden sein können, sind gesättigte oder ungesättigte aliphatische Kohlenwasserstoffgruppen mit 1 bis 20 C-Atomen oder Aralkylgruppen mit 7 bis 10 C-Atomen. R₄ ist eine Alkylgruppe mit 1 bis 6 C-Atomen oder eine Aralkylgruppe mit 7 bis 10 C-Atomen. Das Anion X⁻ kann OH⁻, Cl⁻, Br⁻, CH₃SO₄⁻ oder CH₃CO₂⁻ sein.

Beispiele für geeignete Verbindungen sind Dimethyl-ditalg-ammoniumchlorid oder Dimethyl-benzyl-talg-ammoniumchlorid, wobei der Talg-Alkylrest in hydrierter Form vorliegt.

Die zur Umsetzung benötigte Menge des organischen Kations sollte zwischen 60 und 120 mVal/100 g Smektit betragen.

Bei der Umsetzung der smektitischen Tonsuspension mit dem organischen Kation flockt der gebildete organophile Ton aus und wird filtriert, gewaschen und getrocknet.

Bei der Herstellung von organophilen Tonen ist eine optimale Dispergierung des smektitischen Tonminerals vor der Umsetzung mit der quaternären Ammoniumverbindung entscheidend. Neben der Anwendung von hohen Scherkräften über geeignete Dispergierwerkzeuge setzt man Alkaliphosphate oder -phosphonate zu, welche die Dispersibilität des Smektits verbessern. Phosphate, bevorzugt Natriumpyrophosphat - Na₄P₂O₇ oder Natriumtripolyphosphat - Na₅P₅O₁₀ enthalten Polyanionen, welche die positiven Ladungen an den Kanten des Smektitkristalls absättigen und dem smektitischen Tonmineral eine einheitliche negative Ladung vermitteln, wodurch die Abstoßungskräfte zwischen den Teilchen vergrößert werden.

Nach bekannten Verfahren wurde zur Dispergierung des smektitischen Tonminerals Wasser verwendet, das zuvor nicht enthärtet worden war. Da die eingesetzten Phosphate mit den im Wasser enthaltenen zweiwertigen Kationen schwerlösliche Salze bilden, steht das angebotene Phosphat nicht im erforderlichen Ausmaß für die Assoziation am Smektitkristall zur Verfügung, sondern fällt als schwerlösliches Calciumphosphat aus. Dies führt zu hartnäckigen Anbackungen in Anlageteilen.

Man hat ferner versucht, das Quellvermögen von smektitischen Tonmineralen, die noch einen gewissen Anteil an Erdalkaliionen enthalten, dadurch zu verbessern, daß man wäßrige Suspensionen der Smektite, die ein Phosphat-Dispergiermittel enthielten, durch ein Bett mit organischen Kationenaustauschern in der Alkaliform leitete. Die Erdalkaliionen des smektitischen Tonminerals wurden hierbei durch Alkaliionen ausgetauscht (vgl. US-A-2 966 506 und 4 105 578). Die organischen Kationenaustauscher mußten aber wieder von der Smektitsuspension abgetrennt werden. Außerdem hatte sich ein Teil des Dispergiermittels mit den im Dispergierwasser enthaltenen Erdalkaliionen (Härtebildner) zu unlöslichen Erdalkaliphosphaten umgesetzt, die mit den organischen Kationenaustauschern nicht mehr in Reaktion traten.

Der Erfindung lag die Aufgabe zugrunde, die Bildung von schwerlöslichen Phosphatablagerungen zu vermeiden und eine bessere Dispergierung von smektitischen Tonmineralien für die nachfolgende Umsetzung mit den quaternären Oniumverbindungen zu ermöglichen.

Diese Aufgabe wird erfindungsgemäß dadurch gelöst, daß man bei einem Verfahren der eingangs definierten Gattung das Tonmineral in einer Suspension eines zum Binden von Erdalkaliionen befähigten anorganischen, wasserunlöslichen Wasserenthärters dispergiert und die Feststoffe durch Zugabe der quaternären Oniumverbindung von der wäßrigen Phase abtrennt.

Auf diese Weise werden die Erdalkaliionen durch den anorganischen Kationenaustauscher abgefangen, bevor sie mit dem Dispergiermittel reagieren können, so daß dieses voll für die Dispergierung des smektitischen Tonminerals zur Verfügung steht. Infolge der guten Dispergierbarkeit des smektitischen Tonminerals in der wäßrigen Phase verläuft die Reaktion mit der quaternären Oniumverbindung glatt, und der erhaltene organophile Ton ergibt mit organischen Medien höherviskose Gele als eine nach den bekannten Verfahren erhaltener organophiler Ton.

Der feinteilige, mit den Erdalkaliionen beladene Kationenaustauscher verbleibt nach dem Abtrennen der wäßrigen Phase in der festen Phase des organophilen Tons, ohne dessen Viskositätsverhalten zu beeinträchtigen. Es wurde vielmehr festgestellt, daß in Anwesenheit des mit Erdalkaliionen beladenen Enthärters der organophile Ton in organischen Medien schneller dispergiert wird. Dies ist wahrscheinlich dadurch bedingt, daß die Klumpenbildung zu Beginn der Dispergierung zurückgedrängt wird.

Als feinteiliger anorganischer wasserunlöslicher Wasserenthärter kann vorzugsweise ein Natriumaluminiumsilikat mit einem Calcium-Bindevermögen von 80 bis 200 mg CaO/g, vorzugsweise von 120 bis 180 mg CaO/g, insbesondere von etwa 160 mg CaO/g verwendet werden. Der Wasserenthärter weist vorzugsweise einen Siebrückstand auf 45 µm von maximal 1 Gew.-% und eine mittlere Agglomeratgröße (Malvern, d 50) von maximal 10 µm auf. Ein geeigneter Na-Aluminiumsilikat ist z.B. das Handelsprodukt Wessalith P der Firma Degussa. Wessalith P weist eine Kornfeinheit von < 10 µm auf und verbleibt ohne Abtrennung im organophilen Ton.

Als typische Anwendungsmenge werden je nach der Härte des verwendeten Wassers etwa 0,5 bis 2 g Wasserenthärter pro Liter Wasser verwendet.

Da im Wasser vorhandene Ca²⁺ und Mg²⁺-Ionen vor der Zugabe des smektitischen Tonminerals durch den Wasserenthärter gebunden werden, steht das in der Suspension enthaltene Alkaliphosphat (z.B. Na₄P₂O₇) weitgehend zur Assoziation an die Smektitkristalle und somit zur Verbesserung der Dispersibilität der Smektit-Dispersionen zur Verfügung.

Die Qualitätsverbesserung der erfindungsgemäß hergestellten organophilen Tone zeigt sich beispielsweise in erhöhten Viskositäten der mit den organophilen Tonen hergestellten Gele in Xylol sowie in einer Verkürzung der Dispergierzeit.

Gegenstand der Erfindung ist ferner ein Thixotropiermittel für organische Medien, enthaltend einen durch Umsetzung eines Tonminerals aus der Gruppe der Smektite mit einer quaternären Oniumverbindung erhaltenen organophilen Ton, einen zum Binden von Erdalkaliionen befähigten feinteiligen anorganischen, wasserunlöslichen Wasserenthärter, dessen Alkaliionen mindestens teilweise durch Erdalkaliionen ausgetauscht sind, und ein Dispergiermittel auf der Basis eines Alkaliphosphats oder -phosphonats.

Dieses Thixotropiermittel enthält neben dem organophilen Ton etwa 0,5 bis 2,5 Gew.-% des ausgetauschten Wasserenthärters und etwa 0,05 bis 0,4 Gew.-% Dispergiermittel (jeweils bezogen auf Trockensubstanz).

Gegenstand der Erfindung ist ferner ein thixotropiertes organisches Medium, das das vorstehend definierte Thixotropiermittel enthält. Beispiele für thixotropierte organische Medien sind Anstrichfarben, Schmierfette, Bitumenemulsionen, Klebstoffe und kosmetische Präparate.

Die Erfindung ist durch die nachstehenden Beispiele erläutert:

### Beispiel 1 (Vergleich)

Es wurde eine Suspension von Natriumbentonit als Beispiel eines smektitischen Tonminerals mit Montmorillonit als Hauptkomponente in nicht enthärtetem Wasser hergestellt. Die Wasserhärte betrug 17°dH, die Feststoffkonzentration 2,5 Gew.-%.

Nach einer Dispergierzeit von 15 Minuten (Labordissolver) wurde die Bentonitsuspension mit Dimethyl-ditalg-ammoniumchlorid in folgenden Belegungen geflockt:
80 mVal/100 g, 85 mVal/100 g, 90 mVal/100 g.

Nach 10 Minuten Rührzeit wurde filtriert, gewaschen und bei 70°C im Umluft-Trockenschrank getrocknet.

Der so erhaltene organophile Ton wurde gemahlen, und es wurde wie folgt ein Gel in Xylol hergestellt:
4 g organophiler Ton werden mit Hilfe eines Dispergiergeräts (2800 U/min) über einen Zeitraum von 90 sec. in 100 ml Xylol eindispergiert. Nach Zugabe von 2 ml Methanol wird weitere 90 sec. dispergiert. Nach einer Stunde Standzeit wird die Viskosität im Haake-Viskotester VT 24 in Stufe 16 und Stufe 1 gemessen.

### Beispiel 2 (Vergleich)

Die Arbeitsweise von Beispiel 1 wird mit der Abweichung wiederholt, daß das Wasser vor der Bentonitzugabe mit 0,72 g Natriumaluminiumsilikat mit einer mittleren Teilchengröße von < 10 µm und einem Ca-Bindevermögen von 160 mg CaO/g (Handelsprodukt Wessalith P der Firma Degussa) pro Liter Wasser enthärtet wurde. Der Härtegrad des Wassers betrug nach der Enthärtung 8°dH.

### Beispiel 3 (Vergleich)

Die Arbeitsweise von Beispiel 1 wurde mit der Abweichung wiederholt, daß nach der Bentonitzugabe 0,75 g/l Na₄P₂O₇ zugesetzt wurden.

Wie aus der nachstehenden Tabelle ersichtlich ist, kommt die Wirkung von Na₄P₂O₇ nicht voll zum Tragen, wenn das Wasser nicht enthärtet ist.

### Beispiel 4 (Erfindung)

Die Arbeitsweise von Beispiel 2 wurde mit der Abweichung wiederholt, daß der enthärteten Bentonitsuspension 0,72 g/l Na₄P₂O₇ zugesetzt wurden.

### Beispiel 5 (Erfindung)

Die Arbeitsweise von Beispiel 4 wurde mit der Abweichung wiederholt, daß das Natriumaluminiumsilikat in einer Menge von 1,125 g/l sowie 0,375 g/l Na₄P₂O₇ zugesetzt wurden.

Die Versuchsbedingungen und -ergebnisse sind im einzelnen in Tabelle I angegeben. Die Vergleichsbeispiele 2 und 3 zeigen, daß das Natriumsilikat und das Phosphat allein keine ausreichende Viskositätserhöhung bringen, während die Kombination nach den erfindungsgemäßen Beispielen 4 und 5 verbesserte Viskositätswerte ergibt.

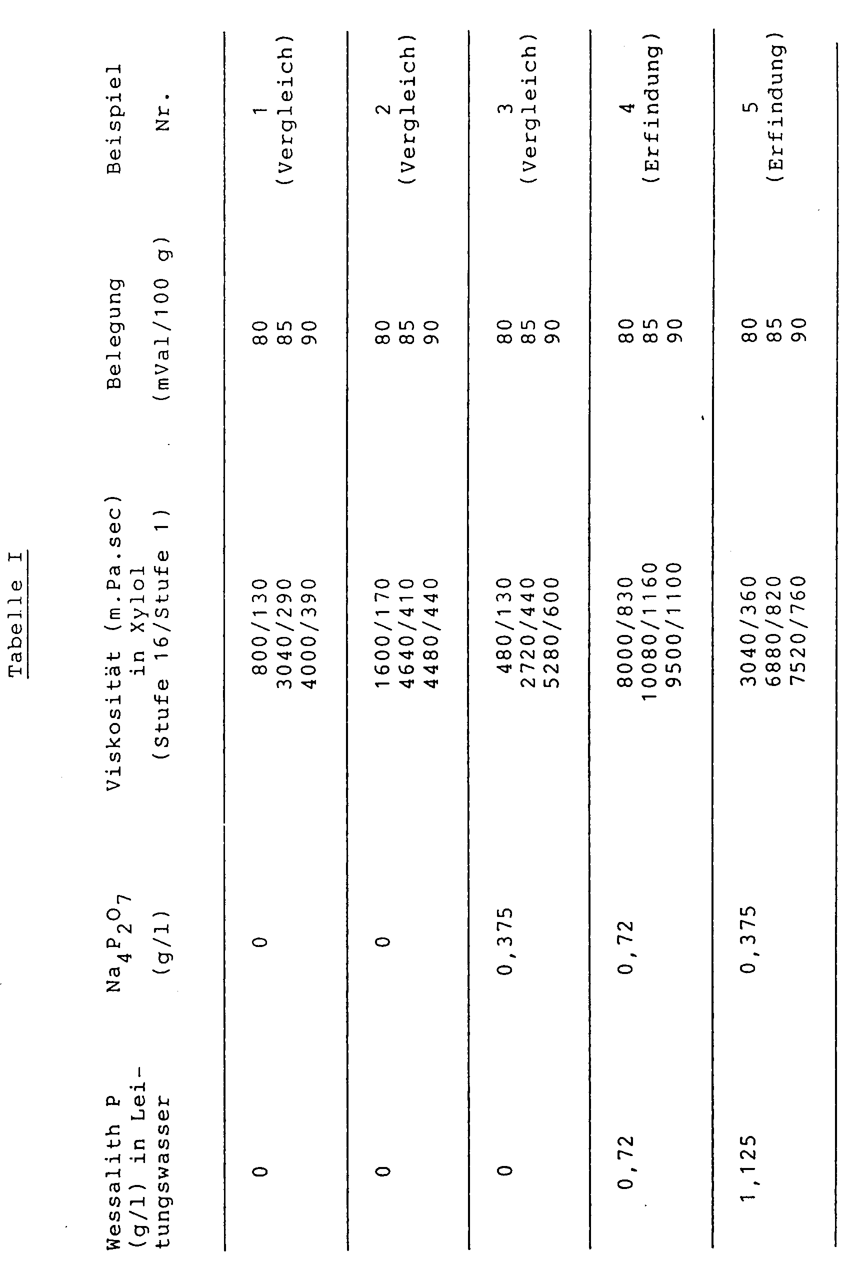

## Patentansprüche

1. Verfahren zur Herstellung eines Thixotropiermittels für organische Medien auf der Basis von organophilen Tonen, durch Umsetzung eines in einer wäßrigen Dispergiermittellösung dispergierten Tonminerals aus der Gruppe der Smektite mit quaternären Oniumverbindungen, dadurch gekennzeichnet, daß man das Tonmineral in einer Suspension eines zum Binden von Erdalkaliionen befähigten anorganischen, wasserunlöslichen Wasserenthärters dispergiert und die Feststoffe durch Zugabe der quaternären Oniumverbindung von der wäßrigen Phase abtrennt.

2. Verfahren nach Anspruch 1, dadurch gekennzeichnet, daß man als quaternäre Oniumverbindung eine quaternäre Ammoniumverbindung verwendet.

3. Verfahren nach Anspruch 1 oder 2 dadurch gekennzeichnet, daß man als Wasserenthärter ein Natriumaluminiumsilikat mit einem Calcium-Bindevermögen von 80 bis 200 mg CaO/g, vorzugsweise von 120 bis 180 mg CaO/g, insbesondere von 160 mg CaO/g, einsetzt.

4. Verfahren nach einem der Ansprüche 1 bis 3, dadurch gekennzeichnet, daß der Wasserenthärter einen Siebrückstand auf 45 µm von maximal 1 Gew.-% und eine mittlere Agglomeratgröße (Malvern, d 50) von maximal 10 µm aufweist.

5. Verfahren nach einem der Ansprüche 1 bis 4, dadurch gekennzeichnet, daß man den Wasserenthärter in Mengen von 0,5 bis 2 g/l Wasser verwendet.

6. Verfahren nach einem der Ansprüche 1 bis 5, dadurch gekennzeichnet, daß man ein Dispergiermittel auf der Basis von Alkaliphosphat, vorzugsweise Natriumpyrophosphat oder Natriumtripolyphosphat, oder auf der Basis von Alkaliphosphonat, verwendet.

7. Thixotropiermittel für organische Medien, enthaltend einen durch Umsetzung eines Tonminerals aus der Gruppe der Smektite mit einer quaternären Oniumverbindung erhaltenen organophilen Ton, einen zum Binden von Erdalkaliionen befähigten feinteiligen anorganischen, wasserunlöslichen Wasserenthärter, dessen Alkaliionen mindestens teilweise durch Erdalkaliionen ausgetauscht sind, und ein Dispergiermittel auf der Basis eines Alkaliphosphats oder -phosphonats.

8. Thixotropiermittel nach Anspruch 7, dadurch gekennzeichnet, daß es neben dem organophilen Ton etwa 0,5 bis 2,5 Gew.-% des ausgetauschten Wasserenthärters und etwa 0,05 bis 0,4 Gew.-% Dispergiermittel (jeweils bezogen auf Trockensubstanz) enthält.

9. Thixotropiertes organisches Medium, enthaltend ein Thixotropiermittel nach Anspruch 7 oder 8.

## Claims

1. Method for manufacturing a thixotropic agent for organic media based on organophilic clays, by the reacting of a clay mineral from the smectites group dispersed in an aqueous dispersant solution with quaternary onium compounds, characterised in that the clay mineral is dispersed in a suspension of an inorganic, water-insoluble water softener capable of binding alkaline earth ions and the solids are separated from the aqueous phase by addition of the quaternary onium compound.

2. Method according to claim 1, characterised in that a quaternary ammonium compound is used as the quaternary onium compound.

3. Method according to claim 1 or 2, characterised in that a sodium-aluminium silicate having a calcium binding power of 80 to 200 mg CaO/g, preferably of 120 to 180 mg CaO/g, in particular of 160 mg CaO/g, is used as the water softener.

4. Method according to any one of claims 1 to 3, characterised in that the water softener has screen tailings of not more than 1 wt % at 45 µm and a mean agglomerate size (Malvern, d 50) of not more than 10 µm.

5. Method according to any one of claims 1 to 4, characterised in that the water softener is used in amounts of 0.5 to 2 g/l of water.

6. Method according to any one of claims 1 to 5, characterised in that a dispersant based on alkali phosphate, preferably sodium pyrophosphate or sodium tripolyphosphate, or based on alkali phosphonate, is used.

7. Thixotropic agent for organic media, containing an organophilic clay obtained by the reacting of a clay mineral from the smectites group with a quarternary onium compound, a fine-particle, inorganic, water-insoluble water softener capable of binding alkaline earth ions, whose alkali ions are substituted at least partly by alkaline earth ions, and a dispersant based on an alkali phosphate or phosphonate.

8. Thixotropic agent according to claim 7, characterised in that it contains in addition to the organophilic clay some 0.5 to 2.5 wt % of the substituted water softener and some 0.05 to 0.4 wt % of dispersant (referred to dry matter in each case).

9. Thixotroped organic medium containing a thixotropic agent according to claim 7 or 8.

## Revendications

1. Procédé de fabrication d'un agent thixotrope pour milieux organiques à base d'argiles organophiles, par conversion d'un minéral d'argile, dispersé dans une solution aqueuse d'agent dispersant, du groupe de la smectite avec des composés oniums quaternaires, caractérisé en ce que l'on disperse le minéral d'argile dans une suspension d'un adoucisseur d'eau inorganique insoluble dans l'eau apte à lier des ions alcalino-terreux, et on sépare les matières solides de la phase aqueuse par ajout du composé onium quaternaire.

2. Procédé selon la revendication 1, caractérisé en ce que l'on utilise comme composé onium quaternaire un composé d'ammonium quaternaire.

3. Procédé selon la revendication 1 ou 2, caractérisé en ce que l'on emploie comme adoucisseur d'eau un aluminosilicate de sodium ayant une aptitude à lier le calcium de 80 à 200 mg CaO/g, de préférence de 120 à 180 mg CaO/g, en particulier de 160 mg CaO/g.

4. Procédé selon l'une des revendications 1 à 3, caractérisé en ce que l'adoucisseur d'eau présente un résidu de tamisage à 45 µm d'au plus 1 % en poids et une taille moyenne d'agglomérat (Malvern, d 50) d'au plus 10 µm.

5. Procédé selon l'une des revendications 1 à 4, caractérisé en ce que l'on utilise l'adoucisseur d'eau en des quantités de 0,5 à 2 g/l d'eau.

6. Procédé selon l'une des revendications 1 à 5, caractérisé en ce que l'on utilise un agent dispersant à base de phosphate alcalin, de préférence du pyrophosphate de sodium ou du tripolyphosphate de sodium, ou à base de phosphonate alcalin.

7. Agent thixotrope pour milieux organiques, contenant une argile organophile obtenue par conversion d'un minéral d'argile du groupe de la smectite avec un composé onium quaternaire, un adoucisseur d'eau inorganique insoluble dans l'eau, finement divisé, apte à lier des ions alcalino-terreux et dont les ions alcalins sont au moins partiellement substitués par des ions alcalino-terreux, et un agent dispersant à base d'un phosphate ou phosphonate alcalin.

8. Agent thixotrope selon la revendication 7, caractérisé en ce qu'il contient outre l'argile organophile environ 0,5 à 2,5 % en poids de l'adoucisseur d'eau substitué et environ 0,05 à 0,4 % en poids d'agent dispersant (rapportés chacun à la matière sèche).

9. Milieu organique rendu thixotrope, contenant un agent thixotrope selon la revendication 7 ou 8.
